# EUROPEAN PATENT APPLICATION

(11) **EP 1 760 995 A2**
(43) Date of publication of application: **07.03.2007**
(21) Application number: 06015983.7
(22) Date of filing: 01.08.2006
(51) Int. Cl.: H04M 1/02, H04M 1/04, G06F 1/16

(54) **Portable terminal comprising a main body, a fastening cradle and an exchangeable cover fixed to the cradle**

(30) Priority: 30.08.2005 KR 20050080032; 19.01.2006 KR 20060005850; 09.06.2006 KR 20060051943
(71) Applicant: Samsung Electronics Co., Ltd., Suwon-si, Gyeonggi-Do (KR)
(72) Inventor: Ha, Yun-Sung, Yeongtong-gu Suwon-si Gyeonggi-do (KR); Lee, Ki-Hyeong, Yeongtong-gu Suwon-si Gyeonggi-do (KR); Kim, Jun-Tae, Yeongtong-gu Suwon-si Gyeonggi-do (KR); Kim, Tae-Yun, Yeongtong-gu Suwon-si Gyeonggi-do (KR)
(74) Representative: Lang, Johannes

(57) **Abstract**

A portable terminal includes a main body, cradle mounted to the main body, and a covering with one portion fixed on the cradle, the covering surrounding at least one surface of the main body. Accordingly, the appearance of the portable terminal may be diversified by providing the covering using the cradle that can be mounted to the main body of the portable terminal. Thus, various textures and colors can be provided according to the structure of the covering, and the covering can be separated from the cradle, thereby contributing to the diversification of the design of the portable terminal.
A battery pack or a Digital Multimedia Broadcasting module may be connected to the main body through the cradle.

## Description

### BACKGROUND OF THE INVENTION

### Field of the Invention:

The present invention generally relates to a portable terminal such as a cellular phone, a Personal Digital Assistant (PDA), and a Hand Held Phone (HHP). More particularly, the present invention relates to a portable terminal comprising a covering using a cradle.

### Description of the Related Art:

Generally, a "portable terminal" is an electronic apparatus which provides electrical communication between users and service providers. Various applications such as voice communication, short message service, mobile banking service, television (TV) watching, on-line game service, and on-demand video service are provided to users using portable terminals.

Conventional portable terminals may be classified in various types according to their appearance. For example, portable communication terminals may be classified as bar-type terminals, flip-type terminals, and folder-type terminals according to their appearance. In a bar-type terminal, input/output devices such as a communication circuit, transmitting unit, and receiving unit are mounted in a single housing. In a flip-type terminal, a flip cover is mounted in the bar-type terminal. In a folder-type terminal, a pair of housings are opened and closed through rotation and input/output devices are arranged on the pair of housings. Recently, a sliding-type terminal has been developed to improve portability and convenience, and to satisfy various user preferences together with the folder-type terminal.

Mobile communication services using portable terminals are becoming more diverse. For example, in addition to voice communication and short message transmission, recent portable terminal allow the transmission of games, music files, moving picture files, on-line games, and multimedia services.

The various tastes of users and the expansion of the range of content of mobile communication services has led to significant changes in the function and design of portable terminals. For example, a camera lens assembly mounted in a portable terminal is expected to provide general photographing functions and also is expected to contribute to the adoption of video telephony.

However, despite the diversification of mobile communication services and functions of conventional portable terminals, the designs of the portable terminals leave much to be desired in terms of their changes or diversification. Although mounting of a camera lens assembly in a portable terminal has become common, the diversification of the design of the portable terminal is achieved only by changing the shape of the portable terminal. Users are not satisfied by portable terminals whose shape is simply changed and, therefore, users frequently replace the portable terminals. This frequent replacement imposes a financial burden on users.

Accordingly, there is a need for an improved portable terminal with a design and appearance that can be changed.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a portable terminal which is capable of contributing to diversification of its design.

According to one aspect of exemplary embodiments of the present invention, there is provided a portable terminal including a main body, a cradle mounted to the main body, and a covering whose one portion is fixed on the cradle, which surrounds at least one surface of the main body.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIG. 1 is a side view of a portable terminal according to an exemplary embodiment of the present invention;
FIG. 2 is a perspective view of the bottom of the portable terminal illustrated in FIG. 1;
FIG. 3 is a perspective view of a cradle and a battery pack of the portable terminal illustrated in FIG. 1;
FIG. 4 is a perspective view of a structure in which the cradle and the battery pack of the portable terminal illustrated in FIG. 1 are connected; and
FIG. 5 is a perspective view of another structure for a battery pack of the portable terminal illustrated in FIG. 1.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

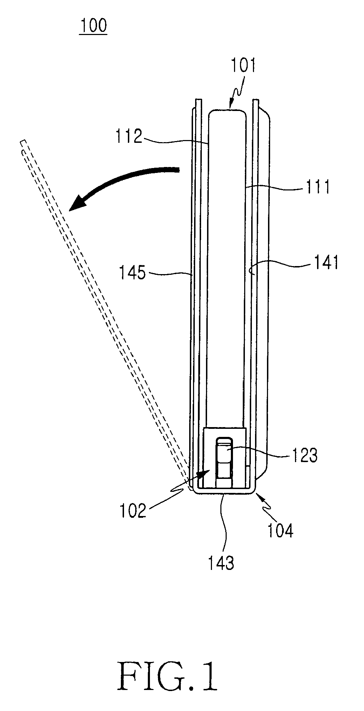

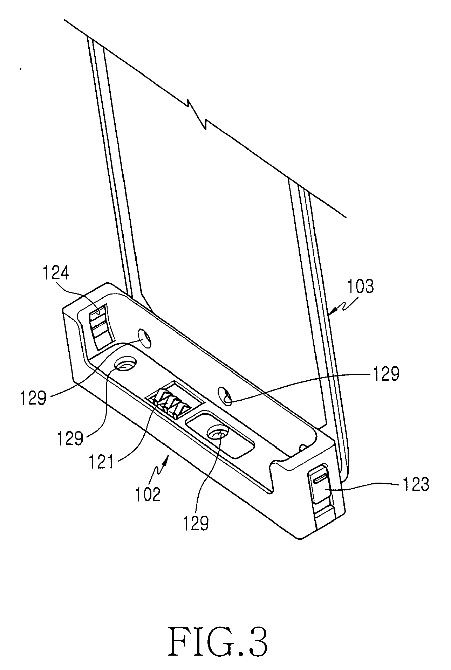

Referring to FIG. 1, a portable terminal 100 according to an exemplary embodiment of the present invention includes a main body 101, a cradle 102, and a covering 104 that accommodates a battery pack 103 (see FIG. 3).

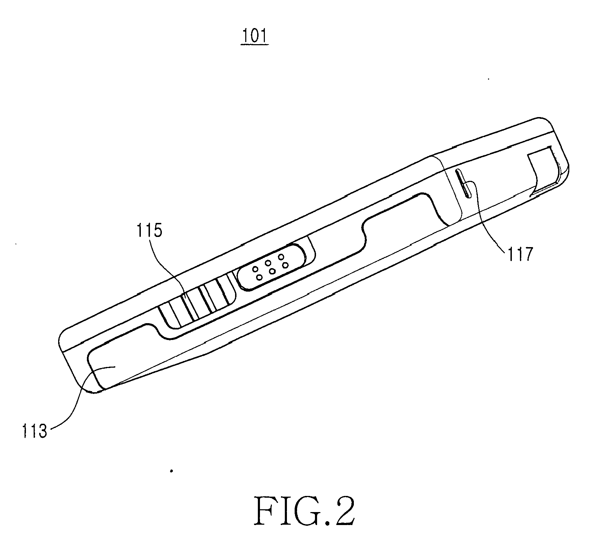

Referring to FIG. 2, the main body 101 is a bar-type terminal in which a keypad, display device, transmitting unit (or mouthpiece), and receiving unit (or earpiece) are mounted in a single housing. The battery pack 103, which is removable from the main body 101, supplies power for the portable terminal 100. In an exemplary embodiment of the present invention, the battery pack 103 is included in the covering 104 and is connected to the main body 101 through the cradle 102, thereby supplying power.

A power terminal 115 is installed in an end portion of the main body 101, for example, a lower side 113 of the main body 101. This is because the portable terminal 100 has a structure in which the battery pack 103 is included in the covering 104 and the power is supplied to the main body 101 through the cradle 102, instead of a structure in which the battery pack 103 is mounted directly in the main body 101.

Referring to FIG. 3, the cradle 102 is structured to be mounted to the main body 101. A power contact terminal 121 corresponding to the power terminal 115 of the main body 101 is installed in the inner side of the cradle 102. The power contact terminal 121 is made of an elastic material and protrudes from the inner side of the cradle 102. Thus, when the main body 101 is mounted in the cradle 102, the power contact terminal 121 is elastically deformed by being pressed by the bottom of the main body 101. The elastic force accumulated in the power contact terminal 121 causes the power contact terminal 121 to be pressed closely against the power terminal 115.

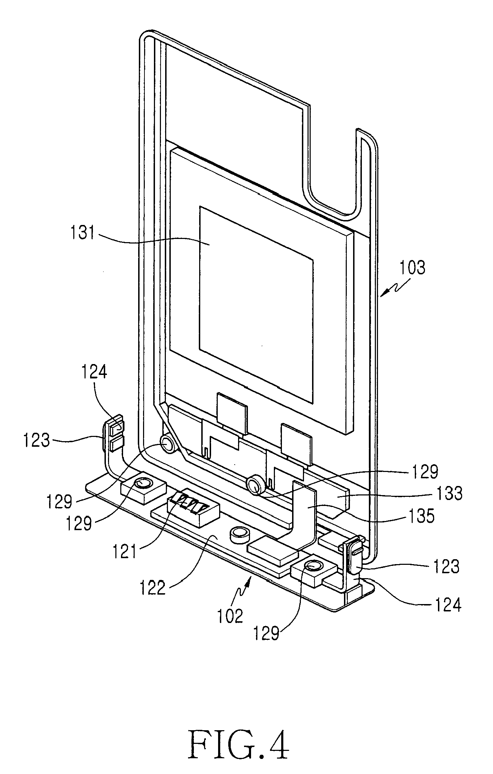

To keep the cradle 102 mounted to the main body 101, a fixing groove 117 is formed in the main body 101 and a fixing hook 124 corresponding to the fixing groove 117 is installed in the cradle 102. The fixing groove 117 is formed in at least one side of the main body 101, and is preferably formed at lower portions of both sides of the main body 101. The fixing hook 124 protrudes from the inner side of the cradle 102 such that the fixing hook 124 engages the fixing groove 117 when the cradle 102 is mounted to the main body 101, thereby preventing the cradle 102 from being separated from the main body 101 without a user's intention to do so. The fixing hook 124 is may be formed by bending a leaf spring and installing the bent portion of the leaf spring so that it protrudes from the inner side of the cradle 102. The fixing hook 124 may also include a leaf spring with one end which is supported on the cradle 102 and a protrusion attached to the inner side of the leaf spring. FIG. 4 illustrates one embodiment of a fixing hook 124 that includes a leaf spring with a protrusion attached to the inner side of the leaf spring.

A support 123, capable of sliding, is installed on the cradle 102. The support 123 restricts movement of the fixing hook 124 by pressing the fixing hook 124 when necessary. When the cradle 102 is mounted to the main body 101, the support 123 is slid to press the fixing hook 124, thereby stably keeping the fixing hook 124 engaged in the fixing groove 117. In FIG. 3, the support 123 is positioned in the upper portion of its movable section to restrict movement of the fixing hook 124. At this time, if the cradle 102 is mounted to the main body 101, the cradle 102 is kept stably mounted to the main body 101 as long as the support 123 is not moved. Preferably, the fixing groove 117 is formed at both sides of the main body 101 and the fixing hook 124 is installed at both sides of the inner side of the main cradle 102 to provide balanced support.

A portion of the covering 104 is fixed on the cradle 102 and the covering 104 surrounds at least one surface of the main body 101. The covering 104 of the portable terminal 100 according to an exemplary embodiment of the present invention includes a bottom portion 143 that is fixed in the inner side of the cradle 102, a rear portion 141 that extends from the bottom portion 143 and surrounds both surfaces of the main body 101, that is, a rear surface 111 and a front surface 112, and a front portion 145. The covering 104 is made of any desired material, such as leather, vinyl, and fabric materials, to provide various texture and color options to the user. A frame (not shown) that maintains the shape of the covering 104 to surround the front surface 112 or the rear surface 111 of the main body 101 may be included in the covering 104. If the main body 101 takes the simplest form, that is, a rectangular parallelepiped, the shape of the covering 104 may be structured to sufficiently surround the main body 101 by maintaining the flat board form, and the shape of the frame may also be simplified accordingly. If a portion of the main body 101 has a curved or protruding form, the shape of the covering 104 is preferably maintained to correspond to the shape of the main body 101 by using a frame, thereby causing the covering 104 to adhere closely to the surface of the main body 101. To maintain the proper shape, according to the shape of the portable terminal 100, the frame is included in the covering 104.

By including a frame in the covering 104, an attachment between the cradle 102 and the covering 104 may be provided. For example, a screw hole may be formed in the frame of the bottom portion 143 of the covering 104, and a screw hole 129 corresponding to the screw hole may be formed in the cradle 102, thereby providing a screw engaging-type attachment that fixes the covering 104 on the cradle 102. In another case, a hook may be formed in the frame of the bottom portion 143 of the covering 104, and an engaging hole corresponding to the hook may be formed in the cradle 102, thereby providing a latch-type attachment that fixes the covering 104 on the cradle 102. In addition to the engaging-type or latch-type attachment, various methods may be used to fix the covering 104 on the cradle 102. In an exemplary embodiment of the present invention, a plurality of screw holes 129 are formed in the cradle 102 and some of the screw holes 129 fix the frame of the bottom portion 143 of the covering 104 on the cradle 102.

Referring to FIG. 1, the front portion 145 of the covering 104 can rotate with respect to one end of the cradle, that is, a portion connected to the cradle 102, thereby opening the front surface 112 of the main body 101. Since the front surface 112 of the main body 101 can be opened, the user can enjoy voice communication, Short Message Service (SMS) message transmission, games, or moving pictures using the portable terminal 100 when the cradle 102 and the covering 104 are mounted in the portable terminal 100.

The power of the portable terminal 100 is supplied by the battery pack 103 included in the covering 104 and mounted in the cradle 102. A lower portion of the battery pack 103 is engaged in the cradle 102 by a fastener such as a screw. Thus, the plurality of screw holes 129 are formed in the cradle 102. Some of the screw holes 129 are used to fix the covering 104 and the other screw holes 129 are used to mount the battery pack 103. When the main body 101 is mounted in the cradle 102, the battery pack 103 faces the rear surface 111 of the main body 101, and the rear portion 141 of the covering 104 is interposed between the rear surface 111 of the main body 101 and the battery pack 103.

Referring to FIG. 4, a battery cell 131 and an overload preventing circuit 133 are installed inside the battery pack 103. A flexible printed circuit 135 extends from the battery pack 103, and the overload preventing circuit 133 enters into the cradle 102. A circuit board 122, to which the flexible printed circuit 135 extending from the battery pack 103 is connected, is installed in the cradle 102, and the power contact terminal 121 is installed on the circuit board 122.

The battery pack 103 may be charged by a charger connected through a connector installed in the cradle 102, the battery pack 103, or by a charger connected through an interface connector provided in the main body 101, as in a conventional portable terminal. A structure for charging the battery pack 103 can be easily understood by those skilled in the art.

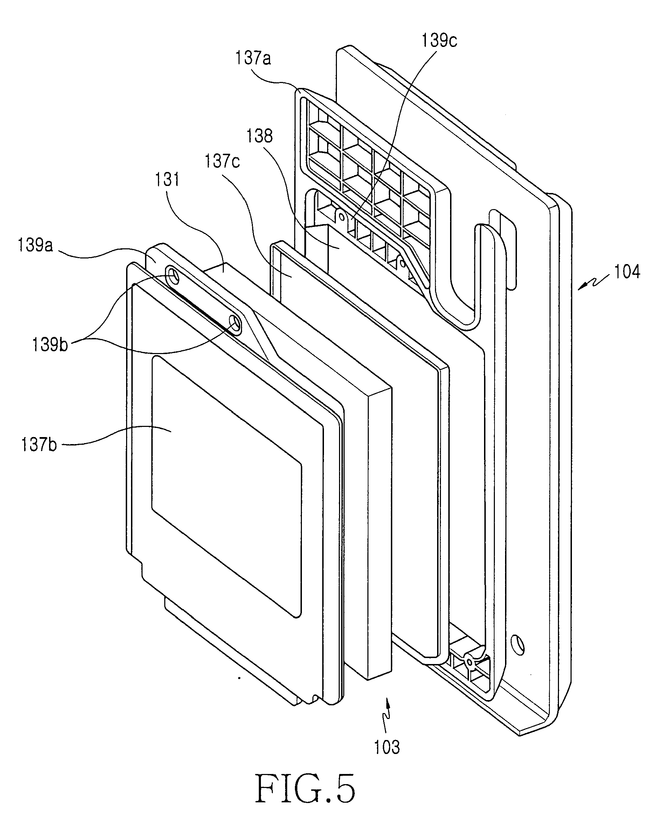

FIG. 5 is a perspective view of another structure of the battery pack 103 of the portable terminal 100 illustrated in FIG. 1. As illustrated in FIG. 5, in this form of the battery pack 103, the battery cell 131 is accommodated in a separate case or housing and is installed in the inner side of the covering 104. This facilitates maintenance of the battery pack, such as replacement of the battery cell 131.

The battery pack 103 includes an outer cover 137a mounted in the inner side of the covering 104 and an inner cover 137b facing the outer cover 137a. In the battery pack 103, the battery cell 131 accommodated in the inner cover 137b is covered by the inner cover 137b and the outer cover 137a when the inner cover 137b is combined to the outer cover 137a while facing the outer cover 137a.

An accommodating recess 138 is formed in the inner side of the outer cover 137a, and a portion of the battery cell 131 is accommodated in the inner cover 137b. The remaining portion of the battery cell 131 protrudes from a face of the inner cover 137b and is accommodated in the accommodating recess 138.

To improve stability of the battery cell 131, the battery pack 103 may include a cell cover 137c mounted on the inner cover 137b. The cell cover 137c is accommodated in the accommodating recess 138 and protects the portion of the battery cell 131 that protrudes from a face of the inner cover 137b.

To combine the inner cover 137b to the outer cover 137a, an engaging part 139a is formed on the edge of a side of the inner cover 137b. Holes 139b are formed in the engaging part 139a for fasteners, such as screws. A combining groove 139c corresponding to the engaging part 139a of the inner cover 137b is formed in the outer cover 137a. Thus, the combining groove 139b accommodates the engaging part 139a when the inner cover 137b is combined to the outer cover 137a.

Once the inner cover 137b is combined to the outer cover 137a, the engaging part 139a is accommodated in the combining groove 139b, thereby keeping the combination of the inner cover 137b and the outer cover 137a stable. In addition, the inner cover 137b and the outer cover 139a can be completely combined with fasteners that use the holes 139b.

As such, the battery pack 103 is structured using the outer cover 137a and the inner cover 137b and the inner cover 137b accommodating the battery cell 131 can be separated from the outer cover 137a, thereby facilitating maintenance of the battery cell 131.

Although not shown in the figures, the portable terminal 100 may include a an internal Digital Multimedia Broadcasting (DMB) receiving module. A DMB service requires a separate antenna device because it uses a frequency that is different from that used in a general mobile communication service.

In the foregoing structure of the portable terminal 100, the battery pack 103 is separated from the main body 101. Thus, the DMB receiving module may be implemented using the battery pack 103. In other words, a flat patch antenna may be installed at an inner wall of the battery pack 103, except for a portion where the battery cell 131 is attached, and a DMB receiving circuit connected to the flat patch antenna may be installed inside the battery pack 103. Accordingly, the DMB receiving module can be implemented regardless of the size or design of the main body 101.

The flat patch antenna may be an antenna pattern having characteristics required for DMB reception, and may be formed by cutting a flat metal board and attaching the cut metal board to the inner wall of the battery pack 103, or by printing an antenna pattern onto the inner wall of the battery pack 103 using a conductive material. Thus, the user can use not only general mobile communication services but also DMB service using the portable terminal 100.

The DMB receiving module, as structured above, is connected to the main body 101 through the cradle 102, thereby allowing the user to enjoy the DMB service using the portable terminal 100.

As described above, according to exemplary embodiments of the present invention, the appearance of a portable terminal may be changed by providing a covering using a cradle that can be mounted in a main body of the portable terminal. Accordingly, various textures and colors can be provided according to the structure of the covering, and the covering can be separated from the cradle, thereby contributing to the diversification of the design of the portable terminal.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A portable terminal comprising:
a main body;
a cradle mounted to the main body; and
a covering comprising at least one portion fixed on the cradle, which the covering surrounding at least one surface of the main body.

2. The portable terminal of claim 1, wherein the covering comprises:
a bottom portion fixed on an inner side of the cradle; and
a front portion and a rear portion extending from the bottom portion to surround front and rear surfaces of the main body,
wherein the main body is opened or closed through rotation of the front portion.

3. The portable terminal of claim 1, wherein the covering comprises at least one of leather, vinyl, and fabric materials.

4. The portable terminal of claim 1, further comprising a battery pack connected to the cradle, wherein the battery pack is adhered closely and in opposition to at least one surface of the main body when the cradle is mounted to the main body.

5. The portable terminal of claim 4, wherein the battery pack is accommodated in the covering that surrounds a rear surface of the main body.

6. The portable terminal of claim 4, further comprising a flexible printed circuit that extends from the battery pack to an inner side of the cradle.

7. The portable terminal of claim 4, wherein at least one end portion of the battery pack is engaged in the cradle by a screw.

8. The portable terminal of claim 4, further comprising:
a flat patch antenna in the inner wall of the battery pack; and
a Digital Multimedia Broadcasting (DMB) receiving circuit installed inside the battery pack and connected to the flat patch antenna.

9. The portable terminal of claim 8, wherein the flat patch antenna is an antenna pattern comprising a characteristic required for DMB reception, which is formed by cutting a flat metal board.

10. The portable terminal of claim 8, wherein the flat patch antenna is an antenna pattern printed onto the inner wall of the battery pack using a conductive material.

11. The portable terminal of claim 4, wherein the battery pack comprises:
an outer cover combined to the inner side of the covering while facing the covering; and
an inner cover combined to the outer cover,
wherein the battery cell is covered by the outer cover and the inner cover.

12. The portable terminal of claim 11, wherein the outer cover has an accommodating recess in its inner side for accommodating the battery cell.

13. The portable terminal of claim 11, wherein the battery pack further comprises a cell cover mounted in the inner cover while facing the inner cover to protect the battery cell.

14. The portable terminal of claim 11, wherein the inner cover is engaged with the outer cover by a fastener.

15. The portable terminal of claim 11, the battery pack further comprising:
an engaging part formed on the edge of a side of the inner cover; and
a combining groove formed in the inner side of the outer cover,
wherein the engaging part is accommodated in the combining groove when the inner cover is combined to the outer cover.

16. The portable terminal of claim 1, further comprising:
a power contact terminal formed in the inner side of the cradle; and
a power terminal provided in at least one end portion of the main body,
wherein the power contact terminal is connected to the power terminal when the cradle is mounted to the main body.

17. The portable terminal of claim 1, further comprising:
a fixing groove formed in at least one side of the main body; and
a fixing hook installed in the cradle,
wherein the fixing hook is engaged in the fixing groove when the cradle is mounted to the main body.

18. The portable terminal of claim 17, further comprising a support which is capable of sliding installed on the cradle, wherein the support is slid to press the fixing hook to maintain the fixing hook engaged in the fixing groove when the cradle is mounted to the main body.

19. The portable terminal of claim 17, wherein the fixing groove is at lower portions of both sides of the main body and the fixing hook is at both sides of the cradle

20. The portable terminal of claim 17, wherein the fixing hook comprises a bent leaf spring and is installed such that a bent portion protrudes from an inner side of the cradle.

21. The portable terminal of claim 17, wherein the fixing hook comprises a leaf spring with one end supported on the cradle and a protrusion attached to one side of the leaf spring, and the leaf spring being engaged in the fixing groove.

22. A portable terminal comprising:
a main body having front and rear surfaces;
a covering accommodating a battery pack, the covering surrounding at least one of the front and rear surfaces of the main body; and.
a cradle mounted to the main body, the cradle receiving at least a portion of the covering, and the cradle connecting the battery pack to the main body to supply power to the main body.

23. The portable terminal of claim 22, wherein the covering comprises:
a bottom portion disposed inside the cradle; and
a front portion and a rear portion extending from the bottom portion to surround the front and rear surfaces of the main body.

24. The portable terminal of claim 22, further comprising:
a power contact terminal disposed on the cradle; and
a power terminal disposed on the main body, the power contact terminal contacting the power terminal when the cradle is mounted to the main body.

25. The portable terminal of claim 22, further comprising:
a fixing groove disposed on the main body; and
a fixing hook installed in the cradle, the fixing hook engaging the fixing groove when the cradle is mounted to the main body.

26. The portable terminal of claim 25, wherein the fixing hook comprises a leaf spring with one end supported on the cradle and a protrusion attached to one side of the leaf spring, the leaf spring engaging the fixing groove.
